# EUROPÄISCHE PATENTSCHRIFT

(11) **EP 3 019 390 B1**
(45) Veröffentlichungstag und Bekanntmachung des Hinweises auf die Patenterteilung: **28.12.2016**
(21) Anmeldenummer: 15720591.5
(22) Anmeldetag: 15.04.2015
(51) Int. Cl.: B62D 55/10

(54) **MILITÄRISCHES KETTENFAHRZEUG**
MILITARY TRACKED VEHICLE
VÉHICULE MILITAIRE À CHENILLES

(30) Priorität: 16.04.2014 DE 102014105476
(43) Veröffentlichungstag der Anmeldung: 18.05.2016
(73) Patentinhaber: Krauss-Maffei Wegmann GmbH & Co. KG, 80997 München (DE)
(72) Erfinder: BACHMANN, Harald, 80997 München (DE); FALKE, Thomas, 80997 München (DE)
(74) Vertreter: Feder Walter Ebert
(86) Internationale Anmeldenummer: PCT/DE2015/100160
(87) Internationale Veröffentlichungsnummer: WO 2015/158333

(56) Entgegenhaltungen:
- EP-A2- 0 479 016

## Beschreibung

Die vorliegende Erfindung betrifft ein Kettenfahrzeug, insbesondere ein militärisches Kettenfahrzeug, mit einer Fahrzeugwanne und zwei seitlich der Fahrzeugwanne schwingungsgedämpft angeordneten Kettenlaufwerken, die über eine Lagerstelle an der Fahrzeugwanne gelagert und über eine Momentenstütze gegenüber der Lagerstelle abgestützt sind.

Derartige Kettenfahrzeuge werden beispielsweise im militärischen Bereich für verschiedene Einsatzzwecke beispielsweise als Kampfpanzer, Schützenpanzer, Transportfahrzeug, Amphibienfahrzeug oder ähnliches eingesetzt.

In der zwischen den Kettenlaufwerken angeordneten Fahrzeugwanne wird häufig die mehrere Besatzungsmitglieder umfassende Besatzung des Fahrzeugs untergebracht. Aus diesem Grund ist es wichtig, dass die Kettenlaufwerke schwingungsgedämpft an der Fahrzeugwanne angeordnet sind, damit die im Fahrbetrieb durch die Ketten entstehenden Vibrationen nicht in die Wanne und damit auf die Fahrzeugbesatzung übertragen werden. Hierdurch ergeben sich besondere Anforderungen hinsichtlich der Befestigung der Kettenlaufwerke an der Fahrzeugwanne, die nicht starr, sondern zum Zwecke der Schwingungsdämpfung von dieser entkoppelt ausgebildet sein muss.

Bei den Kettenlaufwerken handelt es sich häufig um modulare Kettenlaufwerke, die beispielsweise für Transportzwecke auf einfache Weise als Einheit von der Fahrzeugwanne abgekoppelt bzw. an dieser montiert werden können.

Aus der EP 0479016 A2 ist ein Kettenfahrzeug bekannt, dessen modulare Kettenlaufwerke an der Fahrzeugwanne schwingungsgedämpft angeordnet sind. Hierzu sind zumindest teilweise elastisch ausgebildete Lagerstellen vorgesehen, über welche die Kettenlaufwerke schwingungsgedämpft an der Fahrzeugwanne gelagert sind. Um die zum Teil erheblichen Aufstandskräfte wie auch die im Betrieb auftretenden fahrdynamischen Kräfte auffangen zu können und hierdurch ein Lösen der Kettenlaufwerke von den Lagerstellen zu vermeiden, sind stabartige Momentenstütze vorgesehen. Diese Momentenstützen sind nach Art von Zug- und Druckstangen ausgebildet, die sich von dem einen Kettenlaufwerk über die gesamte Fahrzeugbreite bis hin zu dem gegenüberliegenden Kettenlaufwerk erstrecken und diese miteinander koppeln. Hierdurch werden die beiden Kettenlaufwerke gegeneinander und damit auch gegenüber den elastischen Lagerstellen abgestützt.

Diese Art der Momentenstütze hat sich zur Abstützung schwingungsgedämpft angeordneter Kettenlaufwerke gegenüber deren Lagerstellen zwar durchaus bewährt, weist jedoch den Nachteil auf, dass sich die Zug- bzw. Druckstangen über die gesamte Fahrzeugbreite erstrecken, was bei bestimmten Arten von Fahrzeugen zu Problemen führen kann. Beispielsweise können diese Stangen aufgrund des langen Kopplungswegs einen unterhalb des Fahrzeugbodens angeordneten Minenschutz oder im Falle eines Amphibienfahrzeugs die teilweise im Fahrzeugboden angeordneten Ansaugöffnungen des Wasserfahrtantriebs beeinträchtigen.

Aufgabe der vorliegenden Erfindung ist es daher, ein Kettenfahrzeug mit einer demgegenüber kompakteren und dadurch weniger Beeinträchtigungen hervorrufenden Momentenstütze anzugeben.

Diese Aufgabe wird bei einem Kettenfahrzeug der eingangs genannten Art dadurch gelöst, dass die Momentenstütze von einer Zugkopplung gebildet wird, die sich zwischen einem wannenseitigen Kopplungspunkt und einem laufwerksseitigen Kopplungspunkt erstreckt.

Bei einer solchen Momentenstütze ergeben sich kurze Kopplungswege und damit geringe Beeinträchtigungen des Fahrzeugs, da es nicht erforderlich ist, die Zugkopplung von einer Seite des Fahrzeugs quer über dessen gesamte Breite zur anderen Fahrzeugseite zu führen. Die Momentenstütze kann in kompakter Weise von Zugkopplungen gebildet werden, die sich von einem wannenseitigen Kopplungspunkt zu einem laufwerksseitigen Kopplungspunkt erstrecken. Die sich ergebenden Zugkräfte werden in der Fahrzeugwanne eingeleitet, Druckund Querkräfte wie diese durch die Schwingungen der Kette entstehen, werden über die Zugkopplung nicht eingeleitet. Es ergibt sich daher eine kompakte Momentenstütze bei gleichzeitig guter Schwingungsdämpfung.

Gemäß einer vorteilhaften Weiterbildung der Erfindung wird vorgeschlagen, dass die Lagerstellen an einer Seitenwand und die Zugkopplungen am Boden der Fahrzeugwanne angeordnet sind. Die Lagerstellen können insbesondere höher liegen als die Zugkopplungen. Bei den Lagerstellen kann es sich beispielsweise um metallische Lagerzapfen handeln, welche in ein mit einem Elastomer versehenes Gelenkauge eingesteckt sind, wodurch sich eine schwingungsgedämpfte Lagerung ergibt. Durch die Anordnung der Zugkopplungen am Boden der Fahrzeugwanne ergibt sich eine zuverlässige Einleitung der Zugkräfte in die Wanne.

Eine vorteilhafte Ausgestaltung der Erfindung sieht vor, dass über die Fahrzeuglänge verteilt mehrere Lagerstellen angeordnet sind. Beispielsweise können die Lagerstellen und die Zugkopplungen jeweils paarweise angeordnet und über die Länge des Fahrzeugs beispielsweise drei, vier, fünf oder mehr solcher Paare vorgesehen werden. Vorzugsweise sind die Lagerstellen zueinander in gleichmäßigen Abständen angeordnet.

Eine vorteilhafte Ausgestaltung der Zugkopplungen sieht vor, dass diese elastische Ringe, insbesondere Drahtseilringe aufweisen. Über derartige Drahtseilringe lassen sich sehr große Zugkräfte übertragen. Gleichzeitig verhalten diese sich elastisch gegenüber Druck- und Querkräften, wodurch sich eine gute Schwingungsentkopplung erreichen lässt. Es werden nur Zug-, aber keine Druck- und Querkräfte übertragen. Als Drahtseilring können insbesondere Endlosdrahtseilringe verwendet werden, die teilweise auch als Grummet bezeichnet werden.

Eine konstruktive Ausgestaltung der Erfindung sieht vor, dass der wannenseitige Kopplungspunkt unterhalb des Fahrzeugbodens angeordnet ist. In diesem Bereich kann die Zugkopplung auf einfache Weise an den Kopplungspunkt angebunden werden.

Eine weitere Ausgestaltung sieht vor, dass der laufwerksseitige Kopplungspunkt dem wannenseitigen Kopplungspunkt auf gleicher Höhe gegenübersteht. Es ergibt sich auf diese Weise eine Übertragung der Zugkräfte in einer in etwa horizontalen Ebene.

Eine weitere Ausgestaltung sieht vor, dass sich die Zugkopplungen zwischen dem wannenseitigen Kopplungspunkt und dem laufwerksseitigen Kopplungspunkt frei erstrecken. Im Bereich der freien Erstreckung der Zugkopplung können auf die Zugkopplung wirkende Druckkräfte abgefedert werden. Beispielsweise kann sich der laufwerksseitige Kopplungspunkt unter dem Einfluss einer hinreichend großen Druckkraft um einen gewissen Betrag auf den wannenseitigen Kopplungspunkt zubewegen, wodurch sich eine Schwingungsentkopplung erreichen lässt.

Eine weitere Ausgestaltung sieht einen die Kopplungspunkte schützenden Anfahrschutz vor. Insbesondere bei militärischen Fahrzeugen kann es häufig vorkommen, dass diese in unebenem Gelände mit deren Boden auf dem Untergrund aufliegen. Um die Kopplungspunkte dabei vor Beschädigungen zu schützen, ist ein dies verhindernder Anfahrschutz vorgesehen.

In Weiterbildung des Anfahrschutzes wird vorgeschlagen, dass dieser eine in Richtung der Kopplungspunkte ansteigende Anfahrschräge aufweist. Auf diese Weise wird ein Hinübergleiten unterhalb des Fahrzeugs angeordnete Gegenstände erleichtert und Beschädigungen der Kopplungspunkte vermieden.

In konstruktiver Ausgestaltung wird weiter vorgeschlagen, dass der Anfahrschutz von U-förmiger, sich zur Fahrzeugseite hin öffnender Geometrie ist, wodurch sich ein Schutz der Kopplungspunkte aus allen vom Fahrzeugboden her weisenden Richtungen erreichen lässt.

Schließlich wird gemäß einer weiteren Ausgestaltung vorgeschlagen, dass der Abstand der beiden Kopplungspunkte einstellbar ist. Beispielsweise können die Kopplungspunkte über Schraubverbindungen gehalten werden und zur Einstellung des Abstands Langlöcher vorgesehen werden. Über die Abstandseinstellung der Kopplungspunkte lässt sich die Spur der Kettenlaufwerke im Fahrbetrieb einstellen.

Weitere Einzelheiten und Vorteile eines erfindungsgemäßen Kettenfahrzeugs werden nachfolgend unter Zuhilfenahme der beigefügten Zeichnungen eines Ausführungsbeispiels erläutert. Darin zeigen:
- Fig. 1: eine schematische Prinzip-Ansicht eines Kettenfahrzeugs zur Veranschaulichung der Zusammenhänge
- Fig. 2: eine der Fig. 1 entsprechende, detaillierte Ansicht eines Kettenfahrzeugs
- Fig. 3: eine Detailansicht im Bereich einer Momentenstütze
- Fig. 4: eine perspektivische Ansicht auf eine Momentenstütze und
- Fig. 5: eine vergrößerte Ansicht einer Momentenstütze gemäß der perspektivischen Ansicht in Fig. 4.

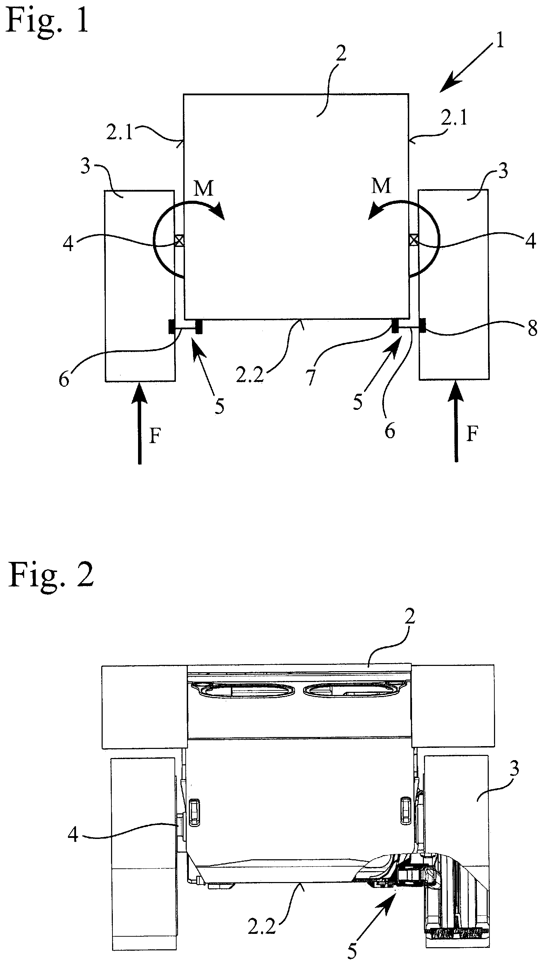

In Fig. 1 dargestellt ist ein Kettenfahrzeug 1 mit einer die Fahrzeugbesatzung aufnehmenden Fahrzeugwanne 2 und seitlich der Fahrzeugwanne 2 angeordneten Kettenlaufwerken 3.

Bei den Kettenlaufwerken 3 handelt es sich um modulare Kettenlaufwerke 3, welche mit als Einheit mit vergleichsweise wenig Montageaufwand beispielsweise zu Transportzwecken von der Fahrzeugwanne 2 gelöst und anschließend wieder mit dieser verbunden werden können.

Um die von den Kettenlaufwerken 3 stammenden Vibrationen nicht direkt auf die Fahrzeugwanne 2 zu übertragen, sind die Kettenlaufwerke 3 nicht direkt, beispielsweise durch Verschrauben oder Verschweißen, mit der Fahrzeugwanne 2 verbunden, sondern sind schwingungsgedämpft an dieser angeordnet. Hierzu sind zwischen den Kettenlaufwerken 3 und der Fahrzeugwanne 2 mehrere Lagerstellen 4 vorgesehen, welche eine schwingungsgedämpfte Lagerung der Kettenlaufwerke 3 an der Fahrzeugwanne 2 erlauben. Bei den Lagerstellen 4 kann es sich beispielsweise um Bolzen handeln, die in ein den Bolzen umgebendes Auge aus einem Elastomer-Material eingesteckt sind. Das Elastomer-Material ist derart gewählt, dass sich die Lagerstellen 4 zur Dämpfung der Schwingungen der Laufwerke 3 in einem gewissen Bereich federelastisch verhalten.

In Fig. 1 schematisch eingezeichnet sind auch die auf die Kettenlaufwerke 3 einwirkenden Aufstandskräfte F. Diese Aufstandskräfte F bewirken ein um die Lagerstellen 4 nach fahrzeuginnen drehendes Moment M. Aufgrund dieses Moments M neigen die Kettenlaufwerke 3 dazu, sich in deren unterem Bereich von der Fahrzeugwanne 2 zu lösen. Um diesen Momenten M entgegenzuwirken, ist im unteren Bereich der Fahrzeugwanne 2 eine Momentenstütze 5 vorgesehen, die insoweit für eine weitgehend momentenfeste Abstützung der Kettenlaufwerke 3 gegenüber den Lagerstellen 4 sorgt.

Auf Einzelheiten der Momentenstützen 5 wird nachfolgend eingegangen werden.

Wie Fig. 1 dies zunächst erkennen lässt, befinden sich die Momentenstützen 5 im Bereich unterhalb des Bodens 2.2 der Fahrzeugwanne 2. Gebildet werden die Momentenstützen 5 jeweils von einer Zugkopplung 6, welche sich zwischen einem wannenseitigen Kopplungspunkt 7 und einem laufwerksseitigen Kopplungspunkt 8 erstreckt. Diese Zugkopplungen 6 weisen seilartige Eigenschaften auf, d.h. es können vergleichsweise große Zugkräfte aber nahezu keine Druckund Querkräfte übertragen werden.

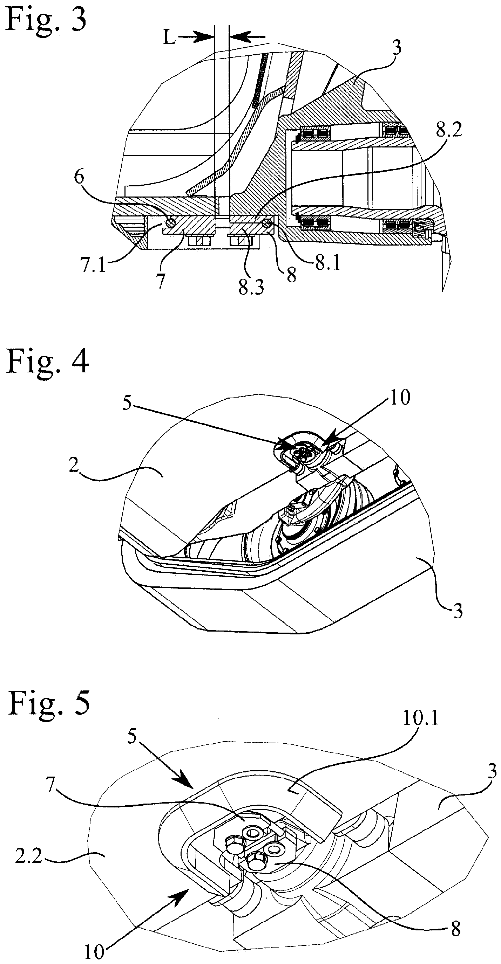

Bei der Zugkopplung 6 handelt es sich gemäß der vergrößerten Darstellung beispielsweise in Fig. 3 um einen endlosen Drahtseilring 6, welcher um die beiden Kopplungspunkte 7, 8 herum geführt ist. Beim Ausführungsbeispiel sind sowohl der wannenseitige Kopplungspunkt 7 als auch der laufwerksseitige Kopplungspunkt 8 von plattenförmiger Geometrie und weisen jeweils Öffnungen 7.1. bzw. 8.1 auf, in welchen die drahtschleifenförmige Zugkopplung 6 angeordnet ist.

Einer der beiden Kopplungspunkte 8 ist zweigeteilt ausgebildet, so dass die Drahtschleife 6 zunächst um den Kopplungspunkt 7 herumgelegt, anschließend in die untere Hälfte 8.2 des Kopplungspunktes 8 eingelegt und schließlich über die obere Hälfte 8.3 des Kopplungspunkts 8 fixiert werden kann.

Wie sich der Darstellung in Fig. 3 weiter entnehmen lässt, erstreckt sich die Zugkopplung 6 in einem Zwischenbereich zwischen den beiden Kopplungspunkten 7, 8 frei und die Kopplungspunkte 7, 8 weisen einen Abstand L auf, um welchem sich die Kettenlaufwerke 3 gegenüber der Fahrzeugwanne 2 bewegen können.

Um die beiden Kopplungspunkte 7, 8 unterhalb des Fahrzeugbodens 2.2 zu schützen, ist gemäß den Darstellungen in den Fig. 4 und 5 ein Anfahrschutz 10 vorgesehen. Dieser weist eine in Richtung der Kopplungspunkte 7, 8 ansteigende Schräge 10.1 auf und ist von insgesamt hufeisenförmiger Geometrie. Etwaige Gegenstände gleiten beim Aufliegen des Fahrzeugs 1 auf dem Untergrund geführt über den Anfahrschutz 10 über die Kopplungspunkte 7, 8 hinweg, ohne dass diese abgerissen werden.

Das vorstehend beschriebene Kettenfahrzeug 1 zeichnet sich durch dessen nur einen kurzen Kopplungsweg erfordernde Momentenstütze 5 aus, die sich auf kurzem Weg von dem Kettenlaufwerk 3 hin zur Fahrzeugwanne 2 erstreckt. Es ergibt sich eine gleichsam einfache wie auch zuverlässige schwingungsentkoppelte Anbindung des Kettenlaufwerks 3 an die Fahrzeugwanne 2 des Kettenfahrzeugs 1 ohne störende Beeinträchtigung irgendwelcher unterhalb des Fahrzeugbodens 2.2 angeordneter Elemente.

### Bezugszeichen:

- 1: Kettenfahrzeug
- 2: Fahrzeugwanne
- 2.1: Seitenwand
- 2.2: Boden
- 3: Kettenlaufwerk
- 4: Lagerstelle
- 5: Momentenstütze
- 6: Zugkopplung
- 7: Kopplungspunkt
- 8: Kopplungspunkt
- 10: Anfahrschutz
- 10.1: Anfahrschräge

- F: Kraft
- M: Moment

- L: Abstand

## Patentansprüche

1. Kettenfahrzeug mit einer Fahrzeugwanne (2) und zwei seitlich der Fahrzeugwanne (2) schwingungsgedämpft angeordneten Kettenlaufwerken (3), die über eine Lagerstelle (4) an der Fahrzeugwanne (2) gelagert und über eine Momentenstütze (5) gegenüber der Lagerstelle (4) abgestützt sind,
**dadurch gekennzeichnet,**
**dass** die Momentenstütze (5) von einer Zugkopplung (6) gebildet wird, die sich zwischen einem wannenseitigen Kopplungspunkt (7) und einem laufwerksseitigen Kopplungspunkt (8) erstreckt.

2. Kettenfahrzeug nach Anspruch 1, **dadurch gekennzeichnet, dass** die Lagerstellen (4) an einer Seitenwand (2.1) und die Zugkopplungen (6) am Boden (2.2) der Fahrzeugwanne (2) angeordnet sind.

3. Kettenfahrzeug nach Anspruch 1 oder Anspruch 2, **dadurch gekennzeichnet, dass** über die Fahrzeuglänge verteilt mehrere Lagerstellen (4) und/oder Zugkopplungen (6) angeordnet sind.

4. Kettenfahrzeug nach einem der vorhergehenden Ansprüche, **dadurch gekennzeichnet, dass** die Zugkopplungen (6) elastische Ringe, insbesondere Drahtseilringe aufweisen.

5. Kettenfahrzeug nach einem der vorhergehenden Ansprüche, **dadurch gekennzeichnet, dass** der wannenseitige Kopplungspunkt (7) unterhalb des Fahrzeugbodens (2.2) angeordnet ist.

6. Kettenfahrzeug nach einem der vorhergehenden Ansprüche, **dadurch gekennzeichnet, dass** der laufwerksseitige Kopplungspunkt (8) dem wannenseitigen Kopplungspunkt (7) auf gleicher Höhe gegenüber steht.

7. Kettenfahrzeug nach einem der vorhergehenden Ansprüche, **dadurch gekennzeichnet, dass** sich die Zugkopplungen (6) zwischen dem wannenseitigen Kopplungspunkt (7) und dem laufwerksseitigen Kopplungspunkt (8) frei erstrecken.

8. Kettenfahrzeug nach einem der vorhergehenden Ansprüche, **gekennzeichnet durch** einen die Kopplungspunkte (7, 8) schützenden Anfahrschutz (10).

9. Kettenfahrzeug nach Anspruch 8, **dadurch gekennzeichnet, dass** der Anfahrschutz (10) eine in Richtung der Kopplungspunkte (7, 8) ansteigende Anfahrschräge (10.1) aufweist.

10. Kettenfahrzeug nach einem der Ansprüche 8 oder 9, **dadurch gekennzeichnet, dass** der Anfahrschutz (10) von U-förmiger, sich zur Fahrzeugseite hin öffnender Geometrie ist.

11. Kettenfahrzeug nach einem der vorhergehenden Ansprüche, **dadurch gekennzeichnet, dass** der Abstand der beiden Kopplungspunkte (7, 8) einstellbar ist.

## Claims

1. Track-type vehicle having a vehicle hull (2) and having two tracked running gears (3) which are arranged in vibration-damped fashion to the sides of the vehicle hull (2), which are mounted on the vehicle hull (2) by way of a bearing point (4) and which are supported relative to the bearing point (4) by way of a torque support (5),
**characterized**
**in that** the torque support (5) is formed by a tensile coupling (6) which extends between a hull-side coupling point (7) and a running-gear-side coupling point (8).

2. Track-type vehicle according to Claim 1, **characterized in that** the bearing points (4) are arranged on a side wall (2.1) and the tensile couplings (6) are arranged on the floor (2.2) of the vehicle hull (2).

3. Track-type vehicle according to Claim 1 or Claim 2, **characterized in that** multiple bearing points (4) and/or tensile couplings (6) are arranged distributed over the length of the vehicle.

4. Track-type vehicle according to one of the preceding claims, **characterized in that** the tensile couplings (6) have elastic rings, in particular wire cable rings.

5. Track-type vehicle according to one of the preceding claims, **characterized in that** the hull-side coupling point (7) is arranged underneath the vehicle floor (2.2).

6. Track-type vehicle according to one of the preceding claims, **characterized in that** the running-gear-side coupling point (8) is situated opposite the hull-side coupling point (7) at the same height.

7. Track-type vehicle according to one of the preceding claims, **characterized in that** the tensile couplings (6) extend freely between the hull-side coupling point (7) and the running-gear-side coupling point (8).

8. Track-type vehicle according to one of the preceding claims, **characterized by** a collision guard (10) which protects the coupling points (7, 8).

9. Track-type vehicle according to Claim 8, **characterized in that** the collision guard (10) has a collision bevel (10.1) which rises in the direction of the coupling points (7, 8).

10. Track-type vehicle according to either of Claims 8 or 9, **characterized in that** the collision guard (10) has a U-shaped geometry which is open toward the vehicle side.

11. Track-type vehicle according to one of the preceding claims, **characterized in that** the spacing of the two coupling points (7, 8) is adjustable.

## Revendications

1. Véhicule à chenilles comprenant un cuvelage de véhicule (2) et deux mécanismes de roulement à chenilles (3) disposés avec amortissement des vibrations latéralement au cuvelage de véhicule (2), lesquels sont montés sur le cuvelage de véhicule (2) par un palier (4) et soutenus par rapport au palier (4) par le biais d'un support de couple (5),
**caractérisé en ce**
**que** le support de couple (5) est formé par un accouplement de traction (6) qui s'étend entre un point d'accouplement côté cuvelage (7) et un point d'accouplement côté mécanisme de roulement (8).

2. Véhicule à chenilles selon la revendication 1, **caractérisé en ce que** les paliers (4) sont disposés sur une paroi latérale (2.1) et les accouplements de traction (6) sur le fond (2.2) du cuvelage de véhicule (2).

3. Véhicule à chenilles selon la revendication 1 ou la revendication 2, **caractérisé en ce que** plusieurs paliers (4) et/ou accouplements de traction (6) sont disposés répartis sur la longueur du véhicule.

4. Véhicule à chenilles selon l'une des revendications précédentes, **caractérisé en ce que** les accouplements de traction (6) possèdent des anneaux élastiques, notamment des anneaux à câble.

5. Véhicule à chenilles selon l'une des revendications précédentes, **caractérisé en ce que** le point d'accouplement côté cuvelage (7) est disposé au-dessous du fond du véhicule (2.2).

6. Véhicule à chenilles selon l'une des revendications précédentes, **caractérisé en ce que** le point d'accouplement côté mécanisme de roulement (8) se trouve à l'opposé du point d'accouplement côté cuvelage (7) à la même hauteur.

7. Véhicule à chenilles selon l'une des revendications précédentes, **caractérisé en ce que** les accouplements de traction (6) s'étendent librement entre le point d'accouplement côté cuvelage (7) et le point d'accouplement côté mécanisme de roulement (8).

8. Véhicule à chenilles selon l'une des revendications précédentes, **caractérisé par** une protection au démarrage (10) qui protège les points d'accouplement (7, 8).

9. Véhicule à chenilles selon la revendication 8, **caractérisé en ce que** la protection au démarrage (10) possède un biseau de démarrage (10.1) remontant en direction des points d'accouplement (7, 8).

10. Véhicule à chenilles selon l'une des revendications 8 ou 9, **caractérisé en ce que** la protection au démarrage (10) présente une forme géométrique en forme de U qui s'ouvre vers le côté du véhicule.

11. Véhicule à chenilles selon l'une des revendications précédentes, **caractérisé en ce que** l'écart entre les deux points d'accouplement (7, 8) est réglable.
